(19) Europäisches Patentamt
European Patent Office
Office européen des brevets

(11) Veröffentlichungsnummer: **0 036 136**
**B1**

# (12) EUROPÄISCHE PATENTSCHRIFT

(45) Veröffentlichungstag der Patentschrift: **13.04.83**

(51) Int. Cl.³: **C 08 F 212/10,** C 08 F 2/38

(21) Anmeldenummer: **81101572.6**

(22) Anmeldetag: **05.03.81**

## (54) Verfahren zur Herstellung von Copolymerisaten von Styrol und/oder dessen Derivaten.

(30) Priorität: **18.03.80 DE 3010374**

(43) Veröffentlichungstag der Anmeldung: **23.09.81 Patentblatt 81/38**

(45) Bekanntmachung des Hinweises auf die Patenterteilung: **13.04.83 Patentblatt 83/15**

(84) Benannte Vertragsstaaten: **DE FR GB IT**

(56) Entgegenhaltungen: **EP-A-0 008 444**

(73) Patentinhaber: **BAYER AG, Zentralbereich Patente, Marken und Lizenzen, D-5090 Leverkusen 1, Bayerwerk (DE)**

(72) Erfinder: **Alberts, Heinrich, Dr., Morgengraben 16, D-5000 Köln 80 (DE)**
Erfinder: **Schubart, Rüdiger, Dr., An der Engelsfuhr 27, D-5060 Bergisch-Gladbach 2 (DE)**
Erfinder: **Pischtschan, Alfred, Dr., Zur Eiche 33, D-5067 Kuerten (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 036 136 B1

BUNDESDRUCKEREI BERLIN

# Verfahren zur Herstellung von Copolymerisaten von Styrol und/oder dessen Derivaten

Die Erfindung betrifft ein Verfahren zur Herstellung von Copolymerisaten von Styrol und/oder dessen Derivaten, (Meth)Acrylnitril und gegebenenfalls (Meth)Acrylsäurealkylestern unter Verwendung von Enolethern als Molekulargewichtsregler. Insbesondere betrifft die Erfindung ein Verfahren zur Herstellung derartiger Copolymerisate unter Verwendung von cycloaliphatischen, ungesättigten Enolethern als Molekulargewichtsregler, wobei diese Enolether neben ihrem regelnden Effekt noch einen zusätzlichen stabilisierenden Einfluß auf das gebildete Polymer ausüben.

In der Technik übliche und bewährte Reglersysteme sind Alkylmercaptane. Daneben werden häufig auch schwefelfreie Reglersysteme, wie sie beispielsweise in Houben—Weyl, Methoden der organischen Chemie, Georg Thieme Verlag, Stuttgart, 1961, Bd. XIV/1, S. 327 ff aufgeführt sind, eingesetzt. Gegenüber Mercaptanreglern haben schwefelfreie Regler im allgemeinen den Vorteil, einen weniger störenden Geruch und eine verringerte Oxidierbarkeit aufzuweisen, im allgemeinen aber auch den Nachteil, eine wesentlich geringere Übertragungsaktivität aufzuweisen, so daß zur Erzielung vergleichbarer Molekulargewichte höhere Reglerkonzentrationen notwendig sind. Als Beispiele für spezielle ungesättigte Molekulargewichtsregler seien 1-Methylcyclohexen-1 (US-PS 3 265 677), Terpinolen (DE-AS 1 795 395) und $\alpha$-Methylstyrol-Dimere (DE-PS 966 375), die bei der Polymerisation von Styrol und Acrylsäurederivaten eingesetzt wurden, aufgeführt.

Es wurde nun gefunden, daß schwefelfreie Enolether als Molekulargewichtsregler für die Polymerisation von Gemischen aus Monovinylaromaten, (Meth)Acrylnitril und gegebenenfalls (Meth)-Acrylsäurealkylestern eine mit Alkylmercaptanen vergleichbare Regleraktivität aufweisen, ohne die Nachteile der Mercaptane, wie Geruch oder Oxidierbarkeit, zu besitzen. Besonders geeignet sind ungesättigte cycloaliphatische Enolether als Molekulargewichtsregler.

Gegenstand der Erfindung ist ein Verfahren zur Herstellung von Copolymerisaten von Styrol und/oder dessen Derivaten durch Polymerisation von

a) 95—20 Gew.-% eines oder mehrerer Monovinylaromaten und
b) 5—80 Gew.-% Acrylnitril und/oder Methacrylnitril,

wobei die Summe des Monomerengemisches aus a) und b) 100 Gew.-% beträgt und bis zu 75 Gew.-% ersetzt sein kann durch $C_1-C_{20}$-Alkylester der Acryl- und/oder Methacrylsäure, dadurch gekennzeichnet, daß die Polymerisation in Gegenwart von 0,01—10 Gew.-%, bezogen auf Gesamtmonomere, eines oder mehrerer Enolether, die sich von aliphatischen oder cycloaliphatischen Aldehyden oder Ketonen ableiten, durchgeführt wird.

Vorzugsweise werden 0,05—1 Gew.-% Enolether, bezogen auf Gesamtmonomere, eingesetzt.

Gegenstand der Erfindung sind außerdem die nach dem erfindungsgemäßen Verfahren erhaltenen Produkte.

Geeignete Monomere zur Herstellung der Copolymerisate sind außer (Meth)Acrylnitril einkernige Monovinylaromaten, d. h. Styrol und dessen Derivate, z. B. $C_1-C_4$-alkyl-substituierte Styrole wie $\alpha$-Methylstyrol, Vinyltoluol und 4-tert.-Butylstyrol und halogensubstituierte Styrole wie 4-Chlorstyrol. Zur Herstellung der Copolymerisate können bis zu 75 Gew.-% des Monomerengemisches aus Monovinylaromaten und (Meth)Acrylnitril ersetzt sein durch $C_1-C_{20}$-Alkylester, vorzugsweise durch $C_1-C_8$-Alkylester, der Acryl- und/oder Methacrylsäure.

Die verwendeten Enolether wirken als Molekulargewichtsregler und beeinflussen gleichzeitig die molekulare Uneinheitlichkeit der erhaltenen Polymeren. Die Uneinheitlichkeit

$$U = \frac{M_w}{M_n} - 1$$

liegt im Bereich U = 1,0 — 2,5.

Wesentliche Vorteile der erfindungsgemäß verwendeten Enolether gegenüber den üblicherweise in der Technik verwendeten Alkylmercaptanen sind bei vergleichbarer Reglerwirkung die Geruchlosigkeit, die fehlende Oxidierbarkeit und ein zusätzlicher stabilisierender Einfluß auf die Polymeren bei thermischer Beanspruchung. Dieser stabilisierende Effekt kann durch Verwendung zusätzlicher synergistischer Antioxidans-Stabilisatorkombinationen bei der thermoplastischen Verarbeitung der Polymerisate noch verstärkt werden.

Die nach dem erfindungsgemäßen Verfahren hergestellten Polymerisats weisen Grenzviskositäten von $\eta = 0{,}5 - 1{,}5$ [dl/g] auf, gemessen in Dimethylformamid bei 25°C. Die nach der Methode der Lichtstreuung ermittelten Molekulargewichte liegen zwischen 20 000 und 250 000. Die Polymeren haben statistischen Aufbau.

Für das erfindungsgemäße Verfahren sind Enolether geeignet, die sich einerseits von aliphatischen oder cycloaliphatischen Aldehyden oder Ketonen und andererseits von Alkyl-, Cycloalkyl- oder Aralkylalkoholen ableiten.

Geeignete Alkohole sind $C_1-C_{20}$-Alkanole, die gegebenenfalls verzweigt oder ungesättigt sein

können sowie $C_5-C_{10}$-Cycloalkanole und $C_7-C_{20}$-Aralkylalkohole, deren Cycloalkyl- bzw. Arylgruppe gegebenenfalls durch niedere Alkylreste substituiert sein können. Als Beispiele seien Methanol, Ethanol, n-Propanol, Isobutanol, 2-Ethylhexanol, Cyclohexanol und Benzylalkohol genannt.

Die cycloaliphatischen Aldehyde oder Ketone können im Ring substituiert oder überbrückt sein und/oder eine Doppelbindung enthalten. Beispielhaft seien Butyraldehyd, Valeraldehyd, Cyclohexylaldehyd, Cyclohexenylaldehyd, Methylcyclohexylaldehyd, Dimethylcyclohexenylaldehyd, Bicyclo-[2.2.1]-hexenylaldehyd und Cyclohexanon genannt. Bevorzugt sind die cycloaliphatischen Aldehyde oder Ketone, die gegebenenfalls durch eine oder zwei $C_1-C_5$-Alkylgruppen, insbesondere durch Methylgruppen im Ring substituiert sind.

Bevorzugt sind Enolether von aliphatischen oder cycloaliphatischen Aldehyden, die eine weitere, nichtkonjugierte Doppelbindung im Aldehydrest besitzen.

Beispiele von Enolethern, die bei dem erfindungsgemäßen Verfahren eingesetzt werden können, sind in den folgenden Tabellen 1 – 5 aufgeführt.

Tabelle 1

Enolether

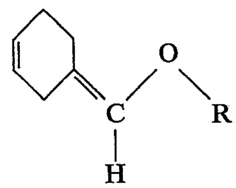

(1)

| R | Siedepunkt Torr/°C |
|---|---|
| —$CH_2$— 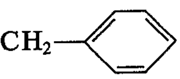 | |
| —$CH_3$ | 25/89 |
| —$C_2H_5$ | 16/72 |
| —n-$C_3H_7$ | 11/86 |
| —n-$C_4H_9$ | 17/106–108 |
| —iso-$C_4H_9$ | 17/99–100 |
| —n-$C_5H_{11}$ | 14/116 |
| —n-$C_8H_{17}$ | 0,08/110 |
| —3,4,5-Trimethylhexyl | 0,15/93 |
| —n-$C_{10}H_{21}$ | 0,12/111–112 |
| —n-$C_{12}H_{25}$ | 0,08/113 |
| —$C_{18}H_{37}$ | 0,05/195–200 |
| 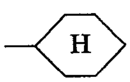 | 0,1/82 |

Tabelle 2

Enolether

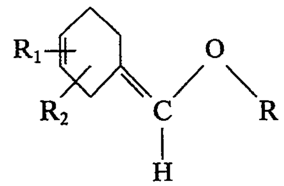

(2)

| $R_1$ | $R_2$ | R | Siedepunkt Torr/°C |
|---|---|---|---|
| $CH_3$ | H | $-CH_2-$ 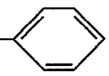 | 0,08/99 |
| $CH_3$ | H | $-n\text{-}C_4H_9$ | |
| $CH_3$ | H | $-n\text{-}C_6H_{13}$ | 29/130 |
| $CH_3$ | H | —2-Ethyl-hexyl | 0,07/84–85 |
| $CH_3$ | H | $-n\text{-}C_8H_{17}$ | 0,08/103 |
| $CH_3$ | H | $-n\text{-}C_9H_{19}$ | 0,06/90 |
| $CH_3$ | H | $-n\text{-}C_{10}H_{21}$ | 0,06–108 |
| $CH_3$ | H | $-n\text{-}C_{12}H_{25}$ | 0,07/136 |
| $CH_3$ | H | $-n\text{-}C_{14}H_{29}$ | 0,07/165 |
| $CH_3$ | H | $-n\text{-}C_{16}H_{33}$ | 0,075/173-175 |
| $CH_3$ | H | 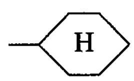 | 0,08/79 |
| $CH_3$ | $CH_3$ | $-CH_2-$ 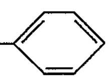 | 0,07/107 |
| $CH_3$ | $CH_3$ | $-C_6H_{13}$ | 0,08/99 |

Tabelle 3

Enolether

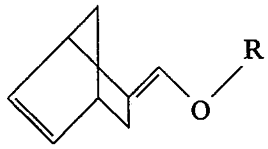

(3)

| R | Siedepunkt Torr/°C |
| --- | --- |
| —$CH_2$— 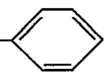 | 0,055/106 |
| 2-Ethylhexyl | 0,12/89–90 |
| —n-$C_{10}H_{21}$ | 0,05/114–116 |
| 3,4,5-Trimethylhexyl | 0,14/100 |

Tabelle 4

Enolether

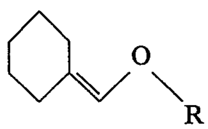

(4)

| R | Siedepunkt Torr/°C |
| --- | --- |
| —$CH_2$— 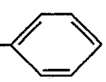 | 0,07/83 |
| 2-Ethylhexyl | 0,075/72–73 |

Tabelle 5

Enolether

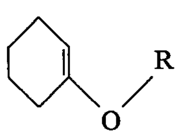

(5)

| R | Siedepunkt Torr/°C |
| --- | --- |
| —2-Ethyl-hexyl | 0,66/68–69 |
| —3,4,5-Trimethylhexyl | 0,22/82–83 |
| —$CH_2$— 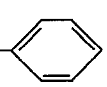 | 0,11/92–94 |

Bevorzugt sind Enolether der Formel 6

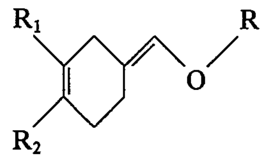

(6)

in der $R_1$ und $R_2$ gleich oder verschieden sind und Wasserstoff oder einen $C_1-C_5$-Alkylrest bedeuten und R einen $C_1-C_{18}$-Alkyl-, Cyclohexyl- oder Benzylrest bedeuten.

Die Herstellung von Enolethern ist ausführlich in der Literatur beschrieben, zum Beispiel in Houben-Weyl, Methoden der Organischen Chemie, Band VI/3, S. 90, Georg Thieme Verlag, Stuttgart, 1965. Eine gute Methode ist die Synthese aus dem Aldehyd über das Acetal als Zwischenstufe, nach der alle Enolether zugänglich sind.

Die als Molekulargewichtsregler verwendeten Enolether werden in Mengen von 0,01 – 10 Gew.-%, vorzugsweise von 0,05 – 1 Gew.-%, bezogen auf die Summe der Monomeren, eingesetzt. Die Zugabe der Enolether während der Polymerisation kann zu jedem beliebigen Zeitpunkt erfolgen, vorzugsweise wird ein Teil des als Regler verwendeten Enolethers zu Beginn der Polymerisation zugesetzt.

Die Durchführung des erfindungsgemäßen Polymerisationsverfahrens kann in homogener oder heterogener Phase erfolgen, das heißt in organischer Lösung oder Suspension, durch Emulsions- oder Suspensionspolymerisation in wäßriger Phase oder durch Polymerisation in der Masse, beispielsweise in der Schmelze.

Die Polymerisation in homogener oder heterogener Phase wird in Abhängigkeit vom gewählten Initiatorsystem bei Temperaturen von –10° C bis +300° C, bevorzugt bei Temperaturen von +60 bis +200° C, durchgeführt. Dabei kann die Polymerisation bei Drücken von 50 bis 760 Torr, vorzugsweise von 400 bis 760 Torr, erfolgen oder bei Drücken von 1 bis 100 bar, vorzugsweise von 1 – 25 bar.

Die Polymerisation kann kontinuierlich oder diskontinuierlich durchgeführt werden.

Die Polymerisation kann in Gegenwart von Radikalauslösern, wie UV-Licht oder anderer energiereicher Strahlung gegebenenfalls in Kombination mit Sensibilisatoren oder Radikalbildnern, wie Peroxiden, erfolgen. Vorzugsweise wird die Polymerisation durch Radikale liefernde Verbindungen initiiert.

Die Initiatoren werden in Mengen von 0,001 bis 2 Gew.-%, vorzugsweise 0,05 bis 0,4 Gew.-%, bezogen auf Gesamtmonomere, eingesetzt.

Als Polymerisationsinitiatoren können beispielsweise Perverbindungen oder Radikale liefernde Azoverbindungen verwendet werden. Beispielhaft seien genannt:

Aliphatische Azodicarbonsäurederivate wie Azobisisobuttersäurenitril oder Azodialkylcarbonsäureester, Peroxide wie Lauroylperoxid, Succinylperoxid, Dibenzoylperoxid, p-Chlorbenzoylperoxid, 2,4-Dichlorbenzoylperoxid, Ketonperoxide wie Methylethylketonperoxid, Methylisobutylketonperoxid, Cyclohexanonperoxid, Acetylacetonperoxid, Alkylester von Persäuren wie tert.-Butylperpivalat, tert.-Butylperoctoat, tert.-Butylperbenzoat, tert.-Butylperisononanat, Mono-tert.-Butylpermaleinat, tert.-Butylperacetat, Percarbonate wie Dicyclohexyl- und Diisopropylpercarbonat, Dialkylperoxide wie Di-tert.-Butylperoxid, Dicumylperoxid, Hydroperoxide wie tert.-Butyl- oder Cumolhydroperoxid, Isophthal-monopersäure oder Acetylcyclohexansulfonylperoxid.

Auch ist die Verwendung von in situ hergestellten Peroxiden und Radikalstartern ebenfalls möglich. In Frage kommende Reaktionen sind beispielsweise die Umsetzung von Phosgen, Chlorameisensäureestern, Säurehalogeniden, Isocyanaten oder Diisocyanaten mit Wasserstoffperoxid oder Hydroperoxiden.

Als wasserlösliche Initiatoren werden Wasserstoffperoxid und die Alkali- oder Erdalkalisalze von Persäuren oder Peroxosäuren verwendet. Bevorzugt eingesetzt werden Ammonium- und Kaliumperoxidisulfat. Wasserlösliche Initiatoren werden bei der Polymerisation in heterogener oder homogener wäßriger Phase eingesetzt.

Weiter kann die Polymerisation auch mit Hilfe von Redoxsystemen gestartet werden. In diesem Fall sind z. B. Kombinationen aus Wasserstoffperoxid und Reduktionsmitteln wie beispielsweise Ascorbinsäure und Schwermetallsalzen wie Eisen- oder Kupfersalzen neben Kombinationen aus Kalium- oder Ammoniumperoxidisulfat mit Alkalimetallpyrosulfit einzusetzen.

Zur Erzielung besonderer Effekte kann das Initiierungssystem weitgehend variiert werden. Hingewiesen sei auf Initiatoren und Redoxsysteme, wie sie in Houben-Weyl, Methoden der Organischen Chemie, 1961, Band XIV/1, beschrieben sind.

Bei der Durchführung des erfindungsgemäßen Verfahrens in wäßriger Suspension werden zur Gewinnung einwandfreier Perlpolymerisate Dispergatoren benötigt. Als Dispergatoren seien beispielhaft genannt: Polyvinylalkohol und teilverseifte Polyvinylacetate, Cellulose- oder Stärkederivate, wie z. B. Methyl-, Ethyl- oder Hydroxyethylcellulosen. Als synthetische Dispergatoren (Copolymerisate von hydrophilen und hydrophoben Monomeren) seien beispielhaft genannt: Styrol-Acrylsäure-, Styrol-Maleinanhydrid-, Ethylen-Acrylsäure-, Ethylen-Maleinanhydrid-, Acrylsäureester-Acrylsäure-, (Meth)Acrylsäurederivate-(Meth)Acrylsäure-Copolymerisate, Polyethylenoxide

oder Ethylen-Propylenoxidcopolymerisate und Polyester mit OH-Zahlen zwischen 10 und 250.

Bei Verwendung von Dispergator-Emulgatorgemischen werden bevorzugt biologisch abbaubare Emulgatoren verwendet. Ferner ist auch die Verwendung anorganischer Kolloide oder anorganische Salze (beispielsweise Phosphorsäurederivate) möglich. Die Polymerisation in wäßriger Suspension wird vorzugsweise bei Temperaturen von 40 bis 150° C bei etwa 1 bis 25 bar durchgeführt.

Das wäßrige Suspensionspolymerisationsverfahren kann ferner in einer umgekehrten Emulsionspolymerisation (Wasser-in-Öl) durchgeführt werden oder zunächst in Form einer umgekehrten Emulsionspolymerisation begonnen und als Suspensionspolymerisation in Wasser zu Ende geführt werden.

Gemäß diesem Prozeß wird eine Lösung aus den Monomeren und einem Radikalbildner hergestellt (organische Phase). Anschließend wird Wasser zur organischen Phase hinzugefügt und eine Wasser-in-Öl-Emulsion, vorzugsweise mit Hilfe von Wasser-in-Öl-Emulgatoren erzeugt. Die Initiatoren oder das Initiatorsystem können sich auch im Wasser befinden. In dem zu polymerisierenden System stellt also zunächst das Wasser, das gegebenenfalls den Initiator oder das Initiatorsystem, Anteile der Monomeren sowie den Wasser-in-Öl-Emulgator ganz oder teilweise enthalten kann, die dispergierte Phase dar und die Restmonomeren bzw. die gesamten Monomeren die kontinuierliche Phase. Die Copolymerisation kann bereits während der Herstellung der Wasser-in-Öl-Emulsion einsetzen. Nach Ausbildung der Wasser-in-Öl-Emulsion (1. Stufe) werden weiteres Wasser und gegebenenfalls Suspensionshilfsmittel der Wasser-in-Öl-Emulsion unter Rühren in einer 2. Stufe zugesetzt, wobei allmählich eine Phasenumkehr eintritt. Es wird eine Öl-in-Wasser-Dispersion gebildet, wobei das Wasser im wesentlichen die kontinuierliche Phase und das Öl die dispergierte Phase bilden. Am Ende der Polymerisation haben sich die in Wasser dispergierten Öl-Tröpfchen vollständig zu porösen, Wasser enthaltenden Perlen verfestigt.

Als Wasser-in-Öl-Emulgatoren, die in Mengen von 0,05 bis 10 Gew.-%, vorzugsweise von 0,5 bis 4 Gew.-%, bezogen auf die Monomeren, eingesetzt werden, werden z. B. Pfropfprodukte von Styrol oder anderen Vinylmonomeren auf Polyether aus Ethylenoxid oder Styrolcopolymerisate mit $\alpha$-,$\beta$-ungesättigten Carbonsäuren oder ein 1 : 1-Copolymerisat von Methacrylsäure-Methacrylsäuremethylester verwendet. Auch andere Wasser-in-Öl-Emulgatoren, wie sie beispielsweise in den GB-PS 928 621, 962 699, 959 131, 964 195 und 1 076 319, den DE-PS 1 300 286 und 1 211 655 oder in der BE-PS 785 091 beschrieben sind, sind geeignet.

Das Gewichtsverhältnis Wasserphase zu organischer Phase soll bei der Herstellung der Wasser-in-Öl-Emulsion (1. Stufe) vorzugsweise im Bereich 0,2 : 1 – 1 : 1 liegen. Die Grenzen können nach oben oder unten überschritten werden, solange die Ausbildung einer Wasser-in-Öl-Emulsion möglich ist, jedoch sollte das Verhältnis Wasserphase zu organischer Phase von 3 : 1 nicht überschritten werden. Für die Herstellung der Wasser-in-Öl-Emulsion empfiehlt es sich, stets die Wasserphase zur organischen Phase zuzusetzen.

Die Enolether können bereits mit der Lösung der Monomeren oder zu einem späteren Zeitpunkt zugegeben werden, spätestens jedoch bevor die Phasenumkehr erfolgt.

Die Polymerisationstemperaturen in der 1. Stufe betragen 30° C bis 120° C, bevorzugt 60° C bis 85° C. Man polymerisiert vorzugsweise bis zu einem Umsatz von 10 bis 60 Gew.-% der Monomeren.

In der 2. Stufe liegt das Gewichtsverhältnis Wasserphase zu Ölphase bevorzugt zwischen 1 : 1 und 3 : 1 und sollte zweckmäßigerweise nicht mehr als 10 : 1 betragen. Die Herstellung der Wasser-in-Öl-Emulsion kann bei Temperaturen von 10° C bis 90° C durchgeführt werden. Die Zugabe des Wassers und der gegebenenfalls einzusetzenden Suspensionshilfsmittel in der 2. Stufe erfolgt nach Ausbildung der Wasser-in-Öl-Emulsion und Erhitzen oder Abkühlen auf die Polymerisationstemperatur der 2. Stufe von 40° C bis 180° C, vorzugsweise 75° C bis 150° C.

Als Suspensionshilfsmittel, die in Mengen von 0,01 bis 3 Gew.-%, vorzugsweise von 0,5 bis 2 Gew.-%, bezogen auf eingesetzte Monomere, eingesetzt werden, haben sich Polyvinylalkohol, teilverseiftes Polyvinylacetat, Alkylcellulosen wie zum Beispiel Methylcellulose, Alkylsulfonate oder Alkylsulfate bewährt.

Ein besonderer Vorteil dieses Verfahrens liegt in der einfachen Aufarbeitung und problemlosen Trocknung des erhaltenen Perlpolymerisates, das eine poröse Struktur besitzt.

Bei Durchführung des erfindungsgemäßen Verfahrens in einem der üblichen organischen Lösungsmittel wird die Polymerisation in einer homogenen Phase aus den Monomeren, dem gewählten Initiatorsystem, dem Lösungsmittel und dem Enolether begonnen. Ist das Lösungsmittel kein Lösungsmittel für das gebildete Polymerisat, wird die Polymerisation als Fällungs- oder Suspensionspolymerisation zu Ende geführt. Als organische Lösungsmittel eignen sich gesättigte aliphatische oder aromatische Kohlenwasserstoffe, substituierte Aromaten wie Toluol oder Chlorbenzol, halogenierte aliphatische Kohlenwasserstoffe wie Methylenchlorid, Tetrachlorkohlenstoff, Trichlorethylen, Tetrachlorethylen oder Trichlorfluormethan oder andere aliphatische Fluorchlorkohlenwasserstoffe oder Fluorkohlenwasserstoffe, niedrigsiedende Alkohole wie Methanol, Ethanol, Propanol, Isopropanol, isomere Butanole, vorzugsweise tert.-Butanol, ferner Dimethylformamid oder Dimethylacetamid.

Das erfindungsgemäße Verfahren kann auch als Emulsionspolymerisation durchgeführt werden.

Als Emulgatoren können die Alkalisalze modifizierter Harzsäuren, wie beispielsweise das

Natriumsalze von hydrierter Abietinsäure mit Erfolg, aber auch Alkylsulfate und -sulfonate mit 12 bis 24 C-Atomen im Alkylrest verwendet werden. Bevorzugt werden biologisch abbaubare Emulgatoren verwendet. Die Emulgatoren werden in einer Konzentration von 0,05 bis 20 Gew.-%, bevorzugt mit 0,5 bis 3 Gew.-%, bezogen auf die wäßrige Phase, eingesetzt. Selbstverständlich können diese Emulgatoren mit den vorgenannten Dispergatoren beliebig kombiniert werden.

Wird die Isolierung des Polymerisats gewünscht, kann dies durch Fällung aus der Emulsion nach bekannten Methoden oder beispielsweise durch Sprühtrocknung erfolgen.

Die Copolymerisation kann ferner mit und ohne Lösungsmittel in Polymerisationsvorrichtungen, wie z. B. Schneckenmaschinen, Knetern oder speziellen Rühraggregaten, erfolgen. Das Abdampfen der Lösungsmittel und Restmonomeren aus den Polymerisationsansätzen erfolgt in Verdampfungsschnecken, Dünnschichtverdampfern, Schlangenrohrverdampfern oder Sprühtrocknern. Den Polymerisationsansätzen können weiterhin übliche Hilfsmittel wie Kettenüberträger für Telomerisation, weitere Molekulargewichtsregler, falls sie zusätzlich neben den Enolethern gewünscht werden, Stabilisatoren, Gleitmittel, Antistatika und Antioxidantien hinzugefügt werden.

Um die fertigen Polymeren vor unerwünschter Oxidation während der thermoplastischen Verarbeitung zu schützen, setzt man ihnen ausreichende Mengen, vorzugsweise 0,3 bis 1,5 Gew.-% an phenolischen Antioxydantien zu, welche mit speziellen Enolethern einen starken synergistischen Effekt zeigen. Geeignete phenolische Antioxydantien sind Verbindungen, die 1—4 sterisch gehinderte phenolische Hydroxylgruppen im Molekül enthalten.

Als Beispiele derartiger Antioxydantien seien genannt:

Monophenole wie:
2,6-Di-tert.-butyl-p-kresol, 2,6-Di-tert.-octyl-p-kresol,
2-tert.-Butyl-6-cyclopentyl-p-kresol, 2-tert.-butyl-6-cyclo-hexyl-p-kresol,
2,4-Dimethyl-6-α-methylcyclohexylphenol, 2,6-Di-octadecyl-p-kresol,
2,6-Di-tert.-butyl-4-phenyl-phenol, 2,6-Di-methylbenzyl-p-kresol,
3-(3,5-Di-tert.-butyl-4-hydroxyphenyl)-propionsäure-octylester;

Bis-phenole wie:
2,2-Methylen-bis-(4-methyl-6-tert.-butyl-phenol),
2,2-Methylen-bis-(4-ethyl-6-tert.-butyl-phenol),
2,2-Methylen-bis-(4-methyl-6-nonyl-phenol),
2,2-Methylen-bis-(4-methyl-6-α-methylcyclohexyl-phenol),
2,2-n-Butyliden-bis-(4,6-dimethyl-phenol),
2,2-Isobutyliden-bis-(4,6-dimethyl-phenol),
2,2-Thio-bis-(4-methyl-6-tert.-butyl-phenol),
4,4-n-Butyliden-bis-(2,6-di-tert.-butyl-phenol),
4,4-n-Butyliden-bis-(2-tert.-butyl-5-methyl-phenol),
4,4-Thio-bis-(2-tert.-butyl-5-methyl-phenol),
1,4-Bis-(3,5-di-tert.-butyl-4-hydroxy-benzyl)-2,3,5,6-tetramethyl-benzol,
Bis-(3,5-di-tert.-butyl-4-hydroxy-benzyl)-sulfid,
1,2-Ethylenglykol-bis-3-(3,5-di-tert.-butyl-4-hydroxyphenyl)-propionsäureester;

Tris-phenole wie:
1,1,3-Tris-(3,5-dimethyl-4-hydroxy-phenyl)-propan,
1,1,3-Tris-(5-tert.-butyl-4-hydroxy-2-methyl-phenyl)-butan,
1,3,5-Tris-(3,5-di-tert.-butyl-4-hydroxy-benzyl)-2,4,6-trimethyl-benzol,
Trimethylolpropan-tris-3-(3,5-di-tert.-butyl-4-hydroxy-phenyl-)-propionsäureester;

Tetra-phenole wie:
Pentaerithrit-tetra-3-(3,5-di-tert.-butyl-4-hydroxy-phenyl)-propionsäureester.

Aufgrund ihrer geringen Eigenfarbe lassen sich die erfindungsgemäß hergestellten thermoplastischen Copolymerisate besonders gut zu brillanten Tönen mit bekannten Farbstoffen oder Pigmenten einfärben. Die Produkte der Erfindung fallen je nach Herstellung und Monomerenkombination im allgemeinen pulverförmig oder in Perlform an. Sie werden verwendet für Formkörper aller Art. Die Copolymerisate können auch zur Herstellung von Filmen oder zu Beschichtungen dienen.

## Experimenteller Teil

In den folgenden Beispielen beziehen sich die Prozentangaben auf das Gewicht, sofern nicht anders angegeben. Die Grenzviskosität $\eta$[dl/g] wurde in Dimethylformamid bei 25° C bestimmt.

Als Beispiel für die Synthese eines Enolethers sei die Umsetzung von Methyltetrahydrobenzaldehyd und Benzylalkohol beschrieben. Entsprechend dieser Arbeitsvorschrift sind alle Enolether zugänglich:

Synthese des Enolethers aus Methyltetrahydrobenzaldehyd und Benzylalkohol

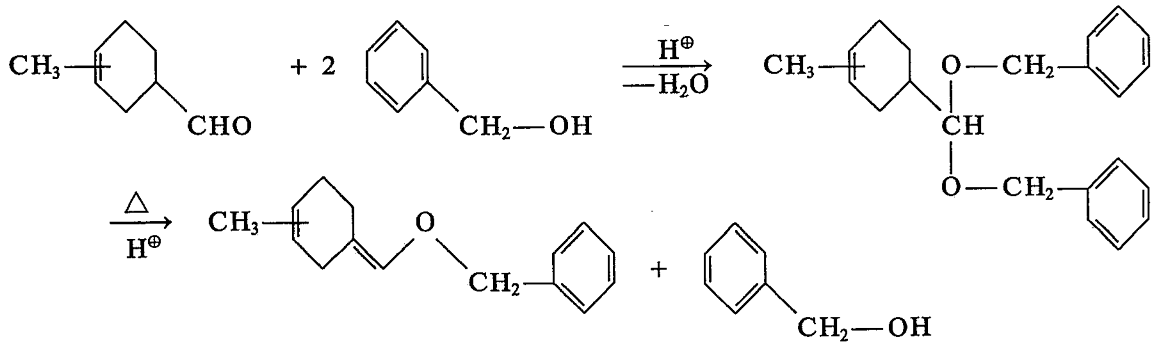


Die Enolethersynthese verläuft über zwei Stufen. Zunächst werden der jeweilige Aldehyd mit dem entsprechenden Alkohol sauerkatalysiert unter Azeotropbedingungen zum Acetal umgesetzt, das anschließend in der Hitze ebenfalls sauerkatalysiert zum Enolether gespalten wird. Alle eingesetzten Verbindungen wurden analog dargestellt. Beispielhaft sei die Synthese des Enolethers nach obigem Schema angegeben.

484 g (3,9 Mol) eines Gemisches aus 3- und 4-Methylcyclohexen-3-aldehyd-(1) wurden in 300 ml Cyclohexen mit 970 g (~9 Mol) Benzylalkohol und einem Gemisch aus 3,44 g p-Toluolsulfonsäure und 3 g Chinolin unter $H_2O$-Abspaltung umgesetzt. Sobald die $H_2O$-Abscheidung beendet ist, wird in Vakuum eingedampft. Der verbleibende Rückstand wird unter vermindertem Druck destilliert. Hierbei wird zunächst eine niedrigsiedende Fraktion aus Benzylalkohol und Enolether erhalten. Die Reindarstellung erfolgt durch Refraktionierung bei $Kp_{0,08}$ 99° C; $n_D^{20}$: 1,5451.

## Allgemeine Arbeitsvorschrift

In einem 6-l-Rührkessel werden unter Stickstoff

| | |
|---|---|
| 1400 ml | Wasser |
| 111 g | Styrol |
| 90 g | Acrylnitril |
| 63 g | Natriumalkylsulfonat |
| 0,44 g | Kaliumperoxidisulfat |
| 1,0 g | Enolether als Regler |

vorgelegt.

Man erwärmt auf 80° C und rührt 30 Min. bei dieser Temperatur. Dann werden Lösung 1 und Lösung 2 innerhalb von 100 Min. in den Autoklaven gegeben.

Lösung 1:

| | |
|---|---|
| 1000 g | Styrol |
| 350 g | Acrylnitril |
| 10,0 g | Regler (Enolether) |

Lösung 2:

| | |
|---|---|
| 15 g | Natriumalkylsulfonat |
| 4,0 g | Kaliumperoxidisulfat, gelöst in 1600 ml Wasser. |

Anschließend wird noch 1 Std. bei 80° C gerührt. Nach Bestimmung des Feststoffgehaltes und des pH-Wertes wird die Emulsion koaguliert und aufgearbeitet. Von dem erhaltenen trockenen Reaktionsprodukt werden die Grenzviskosität in Dimethylformamid bei 25° C und der Acrylnitrilgehalt bestimmt. In den folgenden Tabellen 6—11 sind die in den Beispielen 1—40 eingesetzten Enolether und jeweils die vorerwähnten Daten aufgeführt.

Tabelle 6

| Beispiel lfde. Nr. | Regler | Polymeremulsion | | Copolymerisat | |
|---|---|---|---|---|---|
| | 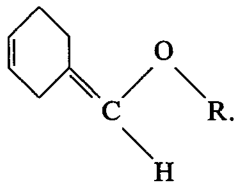 R= | pH | Feststoff-gehalt [Gew.-%] | Viskosität [η] [dl/g] | Acrylnitril-gehalt [Gew.-%] |
| 1 | $—CH_2—$ 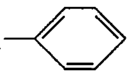 | 9,1 | 35,6 | 0,87 | 24,8 |
| 2 | $—CH_3$ | 8,5 | 34,4 | 1,02 | 24,8 |
| 3 | $—C_2H_5$ | 8,7 | 33,5 | 0,80 | 24,6 |
| 4 | —n-$C_3H_7$ | 8,9 | 33,3 | 0,88 | 23,8 |
| 5 | —n-$C_4H_9$ | 8,5 | 33,1 | 0,74 | 22,0 |
| 6 | —iso-$C_4H_9$ | 8,7 | 34,3 | 0,83 | 24,6 |
| 7 | —n-$C_5H_{11}$ | 8,8 | 34,3 | 0,76 | 25,8 |
| 8 | —n-$C_6H_{13}$ | 8,6 | 33,2 | 0,77 | 24,2 |
| 9 | —n-$C_8$17 | 8,9 | 34,9 | 0,92 | 24,6 |
| 10 | —3,4,5-Trimethylhexyl | 8,6 | 35,2 | 0,72 | 24,8 |
| 11 | —n-$C_{10}H_{21}$ | 8,5 | 33,0 | 0,77 | 24,2 |
| 12 | —n-$C_{12}H_{25}$ | 8,9 | 33,9 | 0,94 | 26,3 |
| 13 | —n-$C_{16}H_{33}$ | 8,5 | 32,6 | 1,12 | 25,6 |
| 14 | 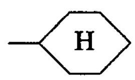 | 8,1 | 35,8 | 0,80 | 26,2 |

Tabelle 7

| Beispiel | Regler | Polymeremulsion | | Copolymerisat | |
|---|---|---|---|---|---|
| | 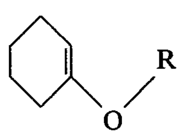 R= | pH | Feststoff-gehalt [Gew.-%] | Viskosität [η] [dl/g] | Acrylnitril-gehalt [Gew.-%] |
| 15 | —2-Ethyl-hexyl | 8,4 | 32,4 | 1,11 | 25,2 |
| 16 | —3,4,5-Trimethylhexyl | 8,8 | 34,5 | 1,21 | 24,7 |
| 17· | $—CH_2—$ 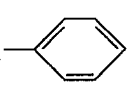 | 8,5 | 33,0 | 0,93 | 27,1 |

Tabelle 8

| Beispiel lfd. Nr. | Regler | Polymeremulsion | | Copolymerisat | |
|---|---|---|---|---|---|
| | 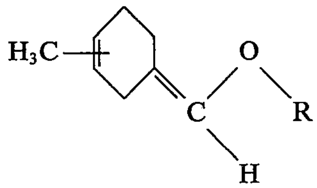 R= | pH | Feststoff-gehalt [Gew.-%] | Viskosität [η] [dl/g] | Acrylnitril-gehalt [Gew.-%] |
| 18 | $—CH_2—$ 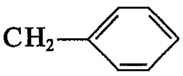 | 8,7 | 33,5 | 0,77 | 25,9 |
| 19 | —2-Ethylhexyl | 8,6 | 34,2 | 0,75 | 25,4 |
| 20 | —n-butyl | 8,0 | 34,7 | 0,78 | 25,8 |
| 21 | —n-nonyl | 8,2 | 34,3 | 0,72 | 26,2 |
| 22 | —n-decyl | 8,2 | 35,2 | 0,82 | 26,2 |
| 23 | —n-hexyl | 7,9 | 37,6 | 0,76 | 25,6 |
| 24 | $—(CH_2)_{13}—CH_3$ | 8,4 | 34,3 | 1,14 | 25,7 |
| 25 | 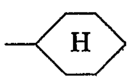 | 8,05 | 34,3 | 0,76 | 25,9 |
| 26 | $(CH_2)_7—CH_3$ | 8,01 | 25,0 | 0,72 | 26,3 |
| 27 | $(CH_2)_{11}—CH_3$ | 8,25 | 33,3 | 0,96 | 25,0 |
| 28 | $(CH_2)_{15}—CH_3$ | 8,2 | 34,6 | 0,76 | 24,2 |

Tabelle 9

| Beispiel lfd. Nr. | Regler | Polymeremulsion | | Copolymerisat | |
|---|---|---|---|---|---|
| | 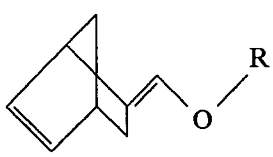 R= | pH | Feststoff-gehalt [Gew.-%] | Viskosität [η] [dl/g] | Acrylnitril-gehalt [Gew.-%] |
| 29 | $—CH_2—$ 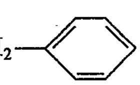 | 8,5 | 33,7 | 1,03 | 25,8 |
| 30 | $—CH_2—$ 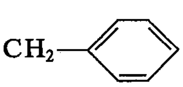 | 8,5 | 33,5 | 1,23 | 26,7 |
| 31 | 2-Ethylhexyl | 8,6 | 34,3 | 1,18 | 26,3 |
| 32 | $—C_{10}H_{21}$ | 8,7 | 34,8 | 1,22 | 25,0 |
| 33 | -3,4,5-Trimethylhexyl | 8,5 | 32,8 | 1,16 | 25,0 |

Tabelle 10

| Beispiel lfd. Nr. | Regler | Polymeremulsion | | Copolymerisat | |
|---|---|---|---|---|---|
| | | pH | Feststoff-gehalt [Gew.-%] | Viskosität [η] [dl/g] | Acrylnitril-gehalt [Gew.-%] |
| 34 | 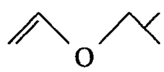 | 8,5 | 33 | 1,12 | 24,7 |
| 35 | 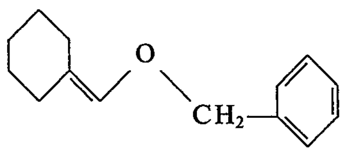 | 8,6 | 34,7 | 1,08 | 25,0 |
| 36 | 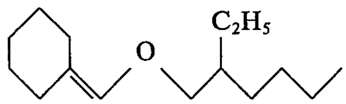 | 8,8 | 34,6 | 1,08 | 20,4 |

Tabelle 11

| Beispiel lfd. Nr. | Regler | Polymeremulsion | | Copolymerisat | |
|---|---|---|---|---|---|
| | | pH | Feststoff-gehalt [Gew.-%] | Viskosität [η] [dl/g] | Acrylnitril-gehalt [Gew.-%] |
| 37 | 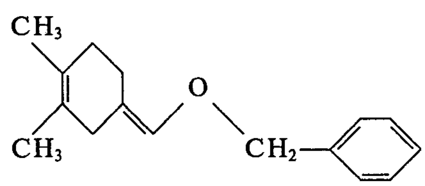 | 8,05 | 34,6 | 0,79 | 24,4 |
| 38 | 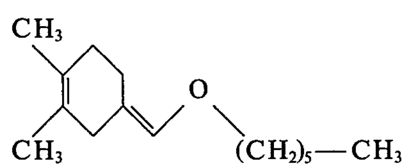 | 8,65 | 35,3 | 0,69 | 24,2 |
| 39 | Vergleichsversuche ohne Regler | | 35,5 | 1,42 | 25,4 |

Beispiel 40

In einem Stickstoff gespülten 5-l-Rührkessel mit Gitterrührer werden bei Raumtemperatur vorgelegt:

3000 g Styrol
1000 g Acrylnitril
35 g Regler von Beispiel Nr. 18

Aus einer Initiatorlösung (Lös. 1) werden 50 ml in die Vorlage geben. Anschließend wird der Ansatz auf 93° C aufgeheizt. Wenn ein Umsatz von 15% erreicht ist, wird kontinuierlich Lösung 2 zugegeben. Die Regelung der Initiatorzufuhr (Lösung 1) erfolgt entsprechend der Reaktor-Innentemperatur.

Lösung 1:
200 g tert. Butylperpivalat in 3800 g Toluol

Lösung 2:
7 640 g Acrylnitril
19 980 g Styrol
220 g Regler von Beispiel Nr. 18

Der Durchsatz beträgt 7,5 kg/Std. Der Monomerumsatz während des stationären Zustandes liegt bei 28%.
In das austretende Reaktionsprodukt wird eine Stabilisatorlösung (Lösung 3)

Lösung 3:
80 g 2,6-di-tert.-Butyl-p-kresol
160 g 2,2'-Methylen-bis(4-methyl-6-$\alpha$-methyl-cyclohexyl-phenol)
3760 g Toluol

mit 150 g/Std. hinzugegeben. Der Polymerisatsirup wird über eine Ausdampfschnecke mit angeschlossener Granilierstufe aufgearbeitet.
Analytische Daten des Copolymerisats:

$[\eta] = 0{,}71$ [dl/g]

Acrylnitrilgehalt: 26,5 Gew.-%

**Patentansprüche**

1. Verfahren zur Herstellung von Copolymerisaten von Styrol und/oder dessen Derivaten durch Polymerisation von

a) 95 – 20 Gew.-% eines oder mehrerer Monovinylaromaten und
b) 5 – 80 Gew.-% Acrylnitril und/oder Methacrylnitril,

wobei die Summe des Monomerengemisches aus a) und b) 100 Gew.-% beträgt und bis zu 75 Gew.-% ersetzt sein kann durch $C_1-C_{20}$-Alkylester der Acryl- und/oder Methacrylsäure, dadurch gekennzeichnet, daß die Polymerisation in Gegenwart von 0,01 – 10 Gew.-%, bezogen auf Gesamtmonomere, eines oder mehrerer Enolether, die sich von aliphatischen oder cycloaliphatischen Aldehyden oder Ketonen ableiten, durchgeführt wird.
2. Verfahren nach Anspruch 1, dadurch gekennzeichnet, daß 0,05 – 1 Gew.-% Enolether, bezogen auf Gesamtmonomere, eingesetzt werden.
3. Verfahren nach Anspruch 1 oder 2, dadurch gekennzeichnet, daß Enolether der Formeln 1 – 5 eingesetzt werden

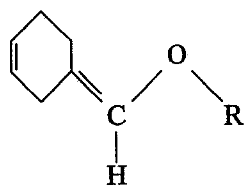

(1)

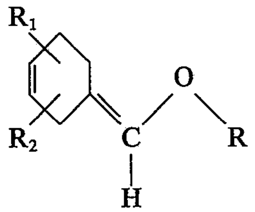

(2)

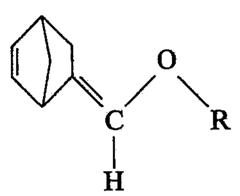

(3)

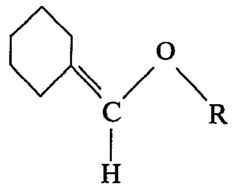

(4)

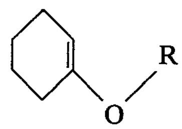

(5)

in denen $R_1$ und $R_2$ gleich oder verschieden sind und Wasserstoff oder einen $C_1-C_5$-Alkylrest bedeuten und R ein $C_1-C_{20}$-Alkyl-, $C_5-C_{10}$-Cycloalkyl- oder $C_7-C_{20}$-Aralkylrest ist.

4. Verfahren nach Anspruch 1 oder 2, dadurch gekennzeichnet, daß ein Enolether der Formel 6 eingesetzt wird

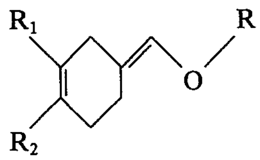

(6)

in der $R_1$ und $R_2$ gleich oder verschieden sind und Wasserstoff oder einen $C_1-C_5$-Alkylrest bedeuten und R einen $C_1-C_{18}$-Alkyl-, Cyclohexyl- oder Benzylrest bedeutet.

5. Verfahren nach Anspruch 1 oder 2, dadurch gekennzeichnet, daß als Monomeres a) Styrol und als Monomeres b) Acrylnitril eingesetzt werden.

6. Verfahren nach Anspruch 5, dadurch gekennzeichnet, daß bis zu 75 Gew.-% des Monomerengemisches aus Styrol und Acrylnitril durch $C_1-C_8$-Alkylester der Acryl- und/oder Methacrylsäure ersetzt werden.

7. Verfahren nach Anspruch 1 oder 2, dadurch gekennzeichnet, daß die Polymerisation in Emulsion, Suspension oder Masse durchgeführt wird.

8. Copolymerisate von Styrol und/oder dessen Derivaten, hergestellt nach einem Verfahren gemäß Anspruch 1 oder 2.

**Claims**

1. Process for the preparation of copolymers of sytrene and/or its derivatives by polymerisation of

a) 95 – 20% by weight of one or more aromatic monovinyl compounds and
b) 5 – 80% by weight of acrylonitrile and/or methacrylonitrile,

the sum of the monomer mixture of a) and b) being 100% by weight and it being possible for up to 75% by weight to be replaced by $C_1-C_{20}$-alkyl esters of acrylic and/or methacrylic acid, characterised in that polymerisation is carried out in the presence of 0.01 – 10% by weight, based on the total quantity of monomers, of one or more enol ethers derived from aliphatic or cycloaliphatic aldehydes or ketones.

2. Process according to Claim 1, characterised in that 0.05 – 1% by weight of enol ethers, based on the total quantity of monomers, is used.

3. Process according to Claim 1 or 2, characterised in that enol ethers of the formulae 1 – 5 are used

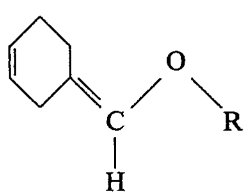

(1)

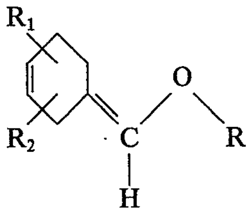

(2)

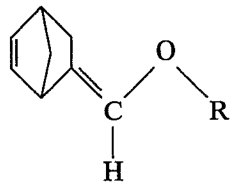

(3)

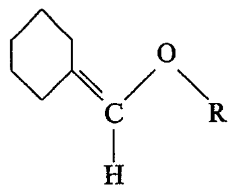

(4)

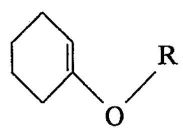

(5)

in which
$R_1$ and $R_2$ are identical or different and denote hydrogen or a $C_1-C_5$-alkyl group and R is a $C_1-C_{20}$-alkyl, $C_5-C_{10}$-cycloalkyl or $C_7-C_{20}$-aralkyl group.

4. Process according to Claim 1 or 2, characterised in that en enol ether of the formula 6 is used

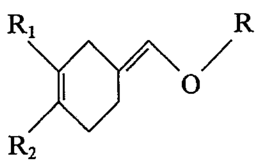

(6)

in which
$R_1$ and $R_2$ are identical or different and denote hydrogen or a $C_1-C_5$-alkyl group and R denotes a $C_1-C_{18}$-alkyl, cyclohexyl or benzyl group.

5. Process according to Claim 1 or 2, characterised in that styrene is used as the monomer a) and acrylonitrile as the monomer b).

6. Process according to Claim 5, characterised in that up to 75% by weight of the monomer mixture of styrene and acrylonitrile are replaced by $C_1-C_8$-alkyl esters of acrylic and/or methacrylic acid.

7. Process according to 1 or 2, characterised in that polymerisation is carried out in emulsion or suspension or in bulk.

8. Copolymers of styrene and/or its derivatives, prepared by a process according to Claim 1 or 2.

**Revendications**

1. Procédé de préparation de copolymères du styrène et/ou de ses dérivés par polymérisation de:

a) 95 à 20% en poids d'un ou plusieurs composés monovinylaromatiques, et
b) 5 à 80% en poids d'acrylonitrile et/ou de méthacrylonitrile,

la somme du mélange des monomères a) et b) représentant 100% en poids, et une proportion allant jusqu'à 75% pouvant être remplacée par des esters alkyliques en $C_1-C_{20}$ de l'acide acrylique et/ou méthacrylique, caractérisé en ce que la polymérisation est effectuée en présence de 0,01 à 10% en poids, par rapport aux monomères totaux, d'un ou plusieurs éthers d'énols dérivant d'aldéhydes ou cétones aliphatiques ou cycloaliphatiques.

2. Procédé selon la revendication 1, caractérisé en ce que l'on utilise de 0,05 à 1% en poids d'éther

d'énol, par rapport aux monomères totaux.

3. Procédé selon la revendication 1 ou 2, caractérisé en ce que l'on utilise des éthers d'énols des formules 1 à 5

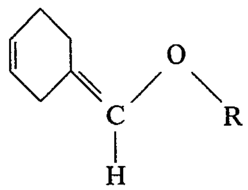

(1)

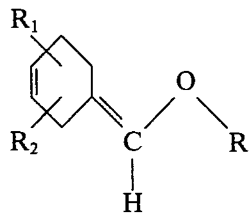

(2)

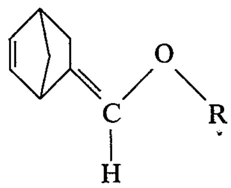

(3)

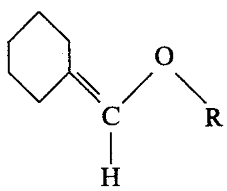

(4)

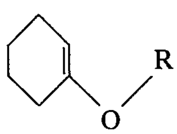

(5)

dans lesquelles $R_1$ et $R_2$, identiques ou différents, représentent l'hydrogène ou un groupe alkyle en $C_1-C_5$ et R représente un groupe alkyle en $C_1-C_{20}$, cycloalkyle en $C_5-C_{10}$ ou aralkyle en $C_7-C_{20}$.

4. Procédé selon la revendication 1 ou 2, caractérisé en ce que l'on utilise un éther d'énol de formule (6)

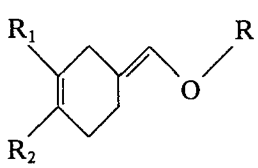

(6)

dans laquelle $R_1$ et $R_2$, identiques ou différents, représentent l'hydrogène ou un groupe alkyle en $C_1-C_5$ et R représente un groupe alkyle en $C_1-C_{18}$, cyclohexyle ou benzyle.

5. Procédé selon la revendication 1 ou 2, caractérisé en ce que l'on utilise en tant que monomère a) le styrène et en tant que monomère b) l'acrylonitrile.

6. Procédé selon la revendication 5, caractérisé en ce que l'on remplace une proportion allant jusqu'à 75% du poids du mélange des monomères consistant en styrène et acrylonitrile par des esters alkyliques en $C_1-C_8$ de l'acide acrylique et/ou méthacrylique.

7. Procédé selon la revendication 1 ou 2, caractérisé en ce que la polymérisation est effectuée en émulsion, en suspension ou en masse.

8. Copolymères du styrène et/ou de ses dérivés, préparés par un procédé selon la revendication 1 ou 2.